# EUROPEAN PATENT APPLICATION

(11) **EP 1 170 956 A2**
(43) Date of publication of application: **09.01.2002**
(21) Application number: 01102046.8
(22) Date of filing: 30.01.2001
(51) Int. Cl.: H04N 7/50

(54) **Method and system for compressing motion image information**

(30) Priority: 06.06.2000 JP 2000169680; 19.07.2000 JP 2000218397; 01.11.2000 JP 2000334440; 21.11.2000 US 716275; 29.12.2000 US 750118
(71) Applicant: Kabushiki Kaisha Office Noa, Tokyo (JP)
(72) Inventor: Kajiki, Noriko, Tokyo (JP); Tanabe, Satoshi, Tokyo (JP)
(74) Representative: Leson, Thomas Johannes Alois, Dipl.-Ing.

(57) **Abstract**

The present invention provides a method and system for compressing motion image information which is capable of compressing information such as image information or sound information by means of predictive coding, with a high compression ratio and at a high speed while maintaining high image and sound quality.

In the method and system of the present invention, spatially or temporally adjacent pixels are compared to each other to output differential information of pixel values; a first area where the differential information is greater than a given parameter or a second area other than said first area are detected and stored into a form of a 1-bit/pixel bit map; and the information of the first area stored in said bit map is compressed, thereby reducing redundant information between frames.

## Description

### BACKGOUND OF THE INVENTION

### Field of the Invention

The present invention relates to a method and system for compressing motion image information with a high compression ration and at a high speed.

### Description of the Related Art

In earlier image signal transmission, an image signal is first converted to another signal and then coded by assigning proper codes selected according to the statistical feature of the converted signal. When the image has high redundancy within a frame, as is the case with an image including a regular pattern or a plain image, there is a high correlation between adjacent pixels, and thus it is possible to predict, to a certain degree, a pixel value to be coded next from a pixel value which has already been coded. Therefore, if components which could not be predicted are extracted, the coding is performed only for those components which could not be predicted, thereby it becomes possible to compress information with a large compression ratio. This technique is called the predictive coding.

In the case of a motion image in a video telephone or the like, images of adjacent frames are very similar to each other, and thus the temporal change is limited. Such temporal redundancy can be removed by means of interframe predictive coding on the basis of interframe prediction. In this case, a block code is generally employed in which one code word is assigned to one symbol, and one frame is divided into a plurality of pixel blocks so that the luminance difference within each block becomes smaller than within the entire frame. The smaller luminance difference within each block allows compression of information. This technique is called block coding.

Entropy coding is known in the art as a coding technique, which achieves data compression by assigning a high efficiency code to the converted signal. Huffman coding is known as a method for generating a high efficiency code. A representative example of the high efficiency code is an arithmetic code in which a probability numeric line is divided into segments in accordance with the occurrence probability of a symbol system, and a binary decimal number indicating a location in a segment is employed as a code for the symbol system. Code words are generated one by one by performing the arithmetic process described above.

A three-step block coding system is known in the art as a technique for coding an image signal in an efficient manner. This technique consists of three steps: sampling; conversion; and quantification. In this technique, in order to retain a two-dimensional resolution and high-frequency components of a given image signal, it is generally required to perform sampling at a frequency twice the highest frequency component.

However, in the conventional image signal compression technique, because the complicated block coding process is employed, it is difficult to compress image data by means of predictive coding with a high compression ratio and at a high speed.

When differential information is compressed in the motion image compression process, that is, when successive values A1 and A2 are predicted to be similar to each other and when the value A1 is known before the value A2 occurs, the difference A2 - A1 is regarded as having a value near 0, and compression is performed using the conventional Huffman code or arithmetic code. However, if A1 and A2 can each take one of values 0,..., n, the difference A2 - A1 can have one of 2n + 1 values. As a result, it is required to prepare 2n + 1 Huffman code words. However, A2 can actually take one of n values, and thus n codes are not used from the local point of view. This circuit that the code includes a large amount of redundancy.

In view of the above problems in the conventional techniques, it is an object of the present invention to provide a method and a system for compressing motion image information by means of predictive coding with a high compression ratio and at a high speed.

### SUMMARY OF THE INVENTION

According to the first aspect of the present invention, there is provided:
a method of compressing motion image information which comprises the steps of comparing spatially or temporally adjacent pixels to each other to output differential information of pixel values; detecting a first area where the differential information is greater than a given parameter or a second area other than said first area to store the first and second areas into a form of a 1-bit/pixel bit map; and compressing information of the first area stored in said bit map, thereby reducing redundant information between frames; and
a system for compressing motion image information by means of comparing spatially or temporally adjacent pixels to each other to output differential information of pixel value thereby reducing redundant information between frames, said system comprising:
   bit map information storage means that detects a first area where the differential information is greater than a given parameter or a second area other than said first area to store the first and second areas into a form of a 1-bit/pixel bit map; and
   information compression means that compresses the information in the first area stored in said bit map.

According to the second aspect of the present invention, there is provided:
a method of compressing motion image information which comprises the steps of dividing luminance of input image into a plurality of blocks of n × m pixels (where n and m are integers of 2 or more), calculating average luminance in each block (Yav), detecting group A where the pixels in the block has luminance higher than the average luminance in the block and group B other than said group A to store the location information of pixels in the group A or B into a form of an n × m-bit bit map; calculating average luminance in the group A and B (AYav and BYav) to construct a block code with the average luminance values in the group A and B, and the location information stored in the bit map; and performing entropy cording process based on said block code thereby reducing redundant information in block, in frame and between frames.; and
a system for compressing motion image information which comprises:
   bit map information storage means that divides luminance of an input image into a plurality of blocks of n × m pixels (where n and m are integers of 2 or more), calculates an average luminance in each block (Yav) and detects group A where the pixels in the block has luminance higher than the average luminance in the block and group B other than said group A to store the location information of pixels in the group A and B into a form of an n × m-bit bit map;
   block coding means that calculates average luminance in the group A and B (AYav and BYav) to construct a block code with the average luminance values in the group A and B, and the location information stored in the bit map; and entropy coding means that performs entropy cording process based on said block code thereby reducing redundant information in block, in frame and between frames.

According to the third aspect of the present invention, there is provided:
a method of compressing motion image information which comprises the steps of comparing spatially or temporally adjacent pixels to each other to output differential information of pixel value; detecting a first area where the differential information is greater than a given parameter or a second area other than said first area to store the first and second areas into a form of a 1-bit/pixel bit map; and compressing information in the first area stored in said bit map, thereby reducing redundant information between frames, wherein prior to interframe compression process, an image in a frame is divided into blocks, each block is approximated by (replaced with) a single plane defined by three pixel values of pixels in the block, and said plane is used as the parameter. ; and
a system for compressing motion image information by means of comparing spatially or temporally adjacent pixels to each other and outputting differential information of pixel value thereby reducing redundant information between frames, said system comprising:
   bit map information storage means that detects a first area where the differential information is greater than a given parameter or a second area other than said first area to store the first and second areas into a form of a 1-bit/pixel bit map; and
   information compression means that compresses the information in the first area stored in said bit map, wherein said system includes block approximation means that divides a frame into a plurality of blocks, each of which is approximated by (replaced with) a single plane defined by three pixel values of a pixel in the block, prior to interframe compression process, and said plane is used as the parameter.

### BRIEF DESCRIPTION OF THE DRAWINGS

Fig. 1 is a block diagram schematically illustrating a process of compressing motion image information;
Fig. 2 is a block diagram schematically illustrating a comparison process performed in accordance with information stored in bit map information storage circuit;
Fig. 3 is a schematic diagram illustrating a coding process;
Fig. 4 is a schematic diagram illustrating a decoding process;
Fig. 5 is a schematic diagram illustrating a coding process;
Fig. 6 is a schematic diagram illustrating a decoding process;
Fig. 7 is a schematic diagram illustrating a plane which is defined by three pixel parameters, the intensity, the gradient in an x direction, and the gradient in a y direction so as to approximate a divided image block;
Fig. 8 is a plan view of an intraframe-compressed image; and
Figs. 9A and 9B illustrate an interframe compression process, wherein Fig. 9A is a plan view of a frame (t) and Fig. 9B is a plan view of a frame (t+1).

### DESCRIPTION OF THE PREFERRED EMBODIMENT

The present invention is described in further detail below with reference to the drawings.

The method of compressing motion image information of the first aspect of the present invention is characterized in that spatially or temporally adjacent pixels are compared to each other and outputting differential information of pixel values, thereby reducing redundant information between frames in accordance with the output differential information.

The method of compressing motion image information of the first aspect of the present invention is characterized in that spatially or temporally adjacent pixels are compared to each other to output differential information of pixel values; a first area where the differential information is greater than a given parameter or a second area other than said first area are detected and stored into a form of a 1-bit/pixel bit map; and the information of the first area stored in said bit map is compressed, thereby reducing redundant information between frames.

The term "pixel value", as used in the present invention, represents widely properties which a pixel has, such as luminance component and color difference component (hue and chroma).

In the first aspect of the present invention, the information of the second area stored in the bit map is preferably processed (deleted) as an area where there is no change in pixel value between frames.

The information stored in the bit map is preferably compressed by means of a binary image coding method at least one selected from a group consisting of run length, modified READ (MR, MMR), modified Huffman (MH), and JBIG coding method.

The information of the first area stored in the bit map is preferably compressed by means of an adaptive Huffman coding process having as many Huffman tables as the amount of predicted information.

Redundant information between frames are preferably further reduced by means of an entropy cording process.

The entropy cording process is preferably performed by means of adaptive Huffman coding process which has as many Huffman tables as the amount of predicted information and which performs coding with one Huffman table selected from the plurality of Huffman tables in accordance with the predicted information or adaptive arithmetic coding process which has as many arithmetic tables as the amount of predicted information and which performs coding with one arithmetic table selected from the plurality of arithmetic tables in accordance with the predicted information.

As the differential information, an absolute value of pixel value, an absolute value of pixel difference output from the comparison of pixel t with the corresponding pixel t-1 of another frame, an absolute value of pixel difference output from the comparison of pixels treated on a block-by-block basis between frames, each block including n × m pixels (where n and m are integers of 2 or more), with corresponding pixels of another frame, or an absolute value of pixel difference output from the comparison of pixels treated on a block-by-block basis in a frame, each block including n × m pixels (where n and m are integers of 2 or more), with corresponding pixels t-1 of another frame is preferably employed.

The n × m pixels are preferably either 2 × 2 pixels, 2 × 4 pixels or 4 × 4 pixels preferably; and it is preferred that when 2 × 2 pixel values between frames are represented by A, B, C, and D, the differential information a, b, c, and d are determined and a 2 × 2-bit bit map is produced such as a = A + B + C + D, b = A - B + C - D, c = A + B - C - D, and d = a - 4D, and wherein decoded output data is produced such as 3A ≈ a + b + c = 3A + B + C - D, 3B ≈ a - b + c = A + 3B - C + D, 3C ≈ a + b - c = A - B + 3C + D, and 3D ≈ a - b - c = -A + B + C + 3D.

It is preferred that intraframe difference presence/absence information is given in the form of bitmap information corresponding to respective 2 × 2 blocks in a frame, and wherein it is determined whether there is a difference between frames by comparing the root-mean-square error of (three) data input to an encoder, that is ((A-A')² + (B-B')² + (C-C')²)^{1/2}, with a parameter, and, if it is determined that there is a difference between frames, a corresponding bit of said intraframe difference presence/absence information is set.

The intraframe compression is preferably carried out prior to interframe compression.

The system for compressing motion image information of the first aspect of the present invention has the same feature and basic structure as in the method of compressing motion image information as described above.

The system for compressing motion image information of the first aspect of the present invention is characterized in that spatially or temporally adjacent pixels are compared to each other to output differential information of pixel value thereby reducing redundant information between frames, said system comprising:
bit map information storage means that detects a first area where the differential information is greater than a given parameter or a second area other than said first area to store the first and second areas into a form of a 1-bit/pixel bit map; and
information compression means that compresses the information in the first area stored in said bit map.

Preferred embodiments in the method of the first aspect of the present invention are equally preferred to the system of the same.

The basic structure of the method and system for compressing motion image information of the first aspect of the present invention is described in line with one embodiment of the first aspect of the present invention.

The method and system for compressing motion image information according to the present invention are characterized in that pixels are treated on a block-by-block basis, each block including n × m pixels (n and m are integers of 2 or more), and that the pixels which are spatially or temporally adjacent are compared to each other, and differential information is output thereby reducing redundant information between frames. That is, pixels t in a frame are compared with corresponding pixels t-1 in a previous frame, pixel by pixel, to detect an area where the absolute difference values are greater than the parameter P. The detected area where the absolute difference values are greater than the parameter P and the other area are stored in the form of the 1-bit/pixel bit map.

In the entropy coding process, codes which will appear in successive frames are predicted, and small deviations from predicted codes are output thereby reducing the redundancy of information. The other information is compressed by means of adaptive Huffman coding or adaptive arithmetic coding in which coding is performed on the basis of a table selected from a plurality of tables in accordance with predicted information. The present invention is described in further detail below with reference to an embodiment in conjunction with the accompanying drawings.

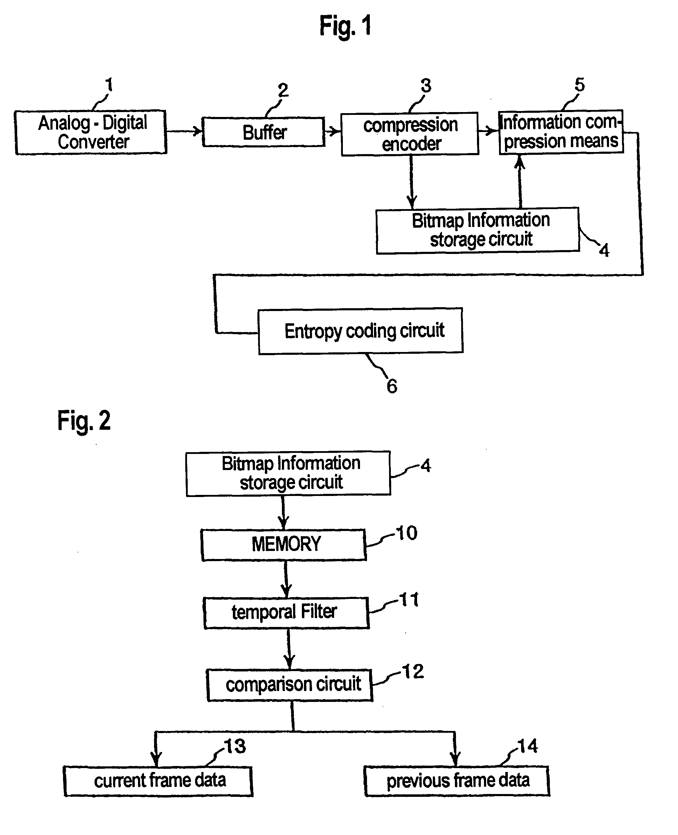

Fig. 1 is a block diagram of a motion image data compression encoder. A composite analog signal output from a device such as a video cameral, a disk player, or a video cassette player, according to the NTSC standard, is input to an analog-to-digital converter 1. The analog-to-digital converter 1 converts the applied analog signal to a digital signal representing one line of a video frame. The resultant digital signal is stored in a buffer 2.

Note that although in Fig. 1, the analog signal output from the NTSC device is converted to a digital signal by the analog-to-digital converter 1 and the resultant digital signal is stored in the buffer 2, the present invention is not limited to the embodiment shown in Fig. 1. The present invention may also be employed to efficiently compress any image signal output from any of various types of devices.

As shown in Fig. 1, the compression encoder 3 includes bit map information storage circuit 4 which compares pixels t in a frame with corresponding pixels t-1 in a previous frame on a pixel-by-pixel basis and detects an area where the absolute difference values are greater than a given parameter P and the other are where the absolute difference values are not greater than the given parameter P and stores the detected areas in the form of a 1-bit bit map.

The comparison between the pixels t and the pixels t-1 is performed in terms of their element (brightness or hue). Herein, t denotes time. That is, pixels (pixels t) in a frame at a current time t are compared with corresponding pixels in a frame (pixels t-1 at locations, in the frame, corresponding to the locations of pixels t-1) at an immediately previous time t-1. The information of the first area stored in bit map information storage means where the absolute value of difference between pixel t and pixel t - 1 are greater than a parameter P, are compressed, and the other information of the second area are processed (deleted) as pixels where there is no change in pixel value between frames.

The information of the first area are compressed by information compression means 5 using an adaptive Huffman coding process having as many Huffman tables as the amount of predicted information. Furthermore, the compression encoder 3 also includes entropy coding circuit 6 for reducing redundant information between frames by means of comparing spatially or temporally adjacent pixels to each other and outputting differential information, wherein the entropy coding circuit may include adaptive arithmetic coding circuit which has as many arithmetic tables as the amount of predicted information and which performs coding using an arithmetic table selected from the plurality of arithmetic tables in accordance with the predicted information.

The size or form of a block is identified as n × m pixels (where n and m are optionally integers of 2 or more). In the present embodiment, pixels are grouped into blocks each including 2 × 2 pixels and treated on a block-by-block basis. When data A, B, C, and D are input to a compression encoder 3, the compression encoder 3 determines output data as a, b, c, and d. Bitmap information storage circuit 4 then produces a bitmap in the form of a 2 × 2 matrix in which output data a, b, c, and d are represented by rounded values such as a = A + B + C + D, b = A - B + C - D, c = A + B - C - D, and d = a - 4D. The resultant output data is stored in the entropy coding circuit 6 or transmitted.

The data will be decoded, by decoding circuit which will be described later, such that 3A ≈ a + b + c = 3A + B + C - D, 3B ≈ a - b + c = A + 3B - C + D, 3C ≈ a + b - c = A - B + 3C + D, and 3D ≈ a - b - c = -A + B + C + 3D. Thus, it is possible to reproduce an image using as small as 3/4 of data so that the resultant reproduced image becomes similar to that obtained by filtering its original image as described below.

For example, when A(3, 1, 1, -1) is given as input data, reproduced data will have an intermediate property between that obtained via a smoothing filter (1, 1, 1, 1) and that obtained via an edge extraction filter (4, -1, -1, -1) (more similar to that obtained via the and edge extraction filter), and a 1/4 error is diffused over the entire data. Similarly, in encoded output data (a, b, c, d), en error is diffused over the entire 2 × 2 block, thereby preventing abrupt degradation in image quality.

Fig. 2 is a block diagram of a comparing circuit for comparing information stored in bit map information storage means.

After completion of the encoding process, pixel data of each frame is sent to a memory 10 in the bit map information storage circuit 4 and stored therein as previous-frame data for one frame period. Thereafter, the pixel data stored in the memory 10 is filtered by a temporal filter 11 serving as a time variable impulse response filter. After the filtering, the current frame data 13 and the previous frame data 14 are examined by the compression encoder 3 in terms of redundancy between frames and the difference between them is calculated. That is, comparison circuit 12 compares the respective coded pixel values with the values of the corresponding pixels of the previous frame. Each pixel is added with a single-bit mark indicating whether the pixel is a new one or the same as the previous pixel. In this process, a frame bit map is produced such that each pixel is mapped by one bit. Herein, the bit maps of the respective frames are distinguished from each other by means of comparison between frames.

In the present embodiment, it is determined whether there is a difference between frames by comparing the root-mean-square error of (three) input data with a threshold value. More specifically, ((A-A')² + (B-B')² + (C-C')²)^{1/2} is compared with a parameter. If it is determined that there is a difference between frames, a corresponding bit of intraframe difference presence/absence information is set (to 1). Herein, the intraframe difference presence/absence information is given in the form of bitmap information corresponding to respective 2 × 2 blocks in a frame, and the intraframe difference presence/difference information is compressed by means of a known compression method such as a run length coding method which will be described later. Furthermore, the thresholding process is also performed upon, for example, b and c of the output data (a, b, c, d). That is, when the absolute value of a difference is not greater than a parameter P given as the threshold value, the difference is regarded as being equal to zero.

The 1-bit/pixel bit map information stored in the bit map information storage circuit 4 is compressed by a binary image coding technique such as a run length, modified READ (MR, MMR), modified Huffman (MH), or JBIG method.

In the case of a binary document image treated by a facsimile machine or the like, there is a high probability that white or black pixels successively appear in one or more continuous areas. Thus, in the run length coding method, one-dimensional segments called runs which include only white or black pixels are employed as units of coding, and the number of pixels included in each run, that is, the length of each run, is employed as a code. For example, in digital facsimiles using a public telephone network, a modified Huffman code is generally used in which the run length model is established separately for black and white pixels.

The modified Huffman coding (MH) is employed as a one-dimensional coding method in facsimile transmission in which an original image is scanned at a pixel density of, for example, 8 pixels/mm thereby obtaining black-and-white pixel information including 1728 pixels per scanning line. The MH code represents the run length, that is, the length of each segment including only white pixels (white run) or only black pixels (black run). Variable length codes are assigned to the respective runs using the statistical tendency that white or black runs having particular lengths occur more frequently than the other lengths, thereby reducing the amount of data.

The modified READ (MR, MMR) method is widely used as a technique for performing two-dimensional coding in addition to the one-dimensional coding. In the NR method, up to one successive scanning line with the normal resolution or up to three successive scanning lines with the high resolution are two-dimensionally coded after being one-dimensionally coded. In the NMR method, the MR method is expanded for the infinite number of scanning lines for both the normal and high resolutions.

In another embodiment of the first aspect of the present invention, as shown in Fig. 2, pixels t in a frame are compared with corresponding pixels t-1 in a previous frame pixel by pixel to detect an area where the absolute difference values are greater than the parameter P. The detected area where the absolute difference values are greater than the parameter P and the other area are stored in the form of the 1-bit bit map. The entropy coding circuit 6 predicts codes which will appear within a frame and in successive frames, respectively, and outputs small deviations from the predicted codes thereby reducing the redundancy of information. Herein, it is known that when an image signal is coded by means of code assignment and the coded signal is transmitted, the average code length per pixel does not become equal to or less than the average amount of information (entropy).

The algorithm of the adaptive Huffman coding method is described below. In the adaptive Huffman coding method, the predictive coding process including the generation of differential information and the Huffman coding is performed in one step thereby achieving an improvement in the code word efficiency. In the conventional Huffman coding process, code words are generally produced using a single Huffman table. In the dynamic Huffman coding, the Huffman table is updated each time one word is coded. In contrast, in the adaptive Huffman coding, there are as many Huffman tables (code tables) as the amount of predicted information, and a proper table is selected by a table selector from the plurality of tables. The coding is performed using the selected table. Thus, data such as image information or audio information is compressed in a highly efficient manner by means of predictive coding.

The algorithm of the adaptive arithmetic coding is described below. In the adaptive arithmetic coding, the predictive coding process including generation of differential information and arithmetic coding is performed in a single step thereby achieving an improvement in the code word efficiency. In the conventional arithmetic coding, code words are generally produced using a single occurrence probability table. In the dynamic arithmetic coding, the occurrence probability table is updated each time one word is coded. In contrast, in the adaptive arithmetic coding, there are as many arithmetic tables (decoding tables) as the amount of predicted information, and a proper table is selected by a table selector from the plurality of tables. The coding is performed using the selected table. Thus, data such as image information is compressed in a highly efficient manner by means of predictive coding.

In the adaptive conversion coding for a motion image, coding is performed after scaling the conversion factors by means of a feedback control in accordance with the filled factor of a transmission buffer memory. In this technique, in accordance with the histogram of conversion factors for a typical image, a threshold value for determining non-significant factors corresponding to signal values which are not coded, a run length code used to encode the continuity of the non-significant factors, and a Huffman coding table used to encode the significant factors are determined, and coding is performed in accordance with them.

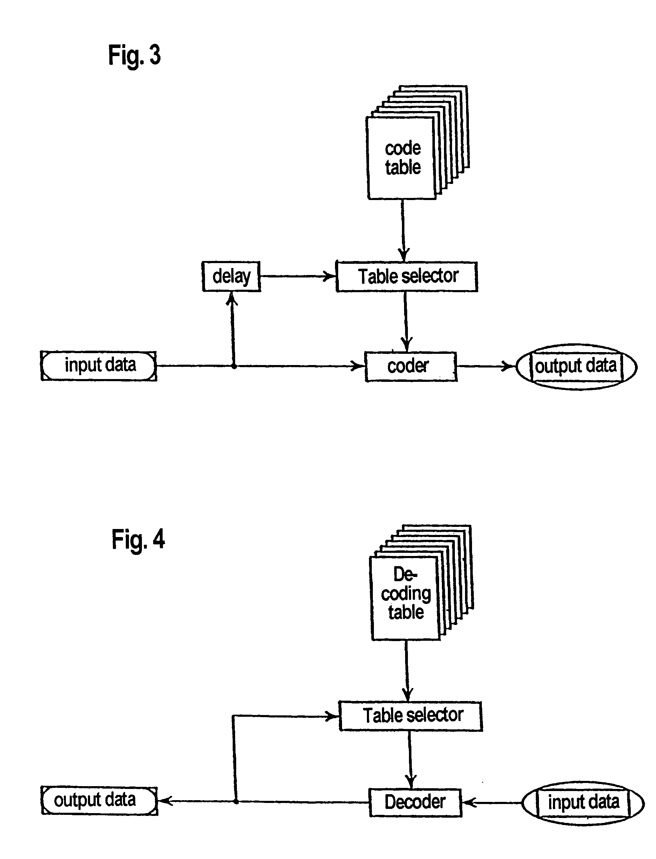

Fig. 3 illustrates a specific example of a predictive coding circuit. As shown in Fig. 3, input image data which has been converted into a digital form by means of analog-to-digital conversion is applied to a table selector after being delayed. This image data is coded and compared with image data which is directly applied to an encoder. The table selector selects a code table from a plurality of code tables in accordance with the predicted information and sends the selected code table to an encoder. The encoder converts the input image data into an adjusted code word thereby compressing the input image data.

Fig. 4 illustrates a specific example of a predictive decoding circuit. As shown in Fig. 4, a code word is sent to a decoder. The code word which has been sent directly to the decoder is sent to a table selector. The table selector selects a decoding table from a plurality of decoding tables in accordance with predicted information and sends the selected decoding table to the decoder. The decoder determines the difference with respect to the pixel value which has already been decoded thereby obtaining adjusted image data.

Next, the method and system for compressing motion image information of the second aspect of the present invention is described in detail. The method of the second aspect of the present invention has a basic structure performing the two-stage process of block coding and entropy coding in order to compress motion image at as high speed as possible and at high compression ratio. The input image data is assumed as YCC, 4:1:1, and color model image data undergoes color model conversion process prior to the coding process as described above. The block coding performs information compression under favor of the property where one frame is divided into a plurality of pixel blocks so that the luminance difference within each block becomes smaller than within the entire frame.

The method of compressing motion image information of the second aspect of the present invention is characterized in that luminance of input image is divided into a plurality of blocks of n × m pixels (where n and m are integers of 2 or more), average luminance in each block (Yav) is calculated, group A where the pixels in the block has luminance higher than the average luminance in the block and group B other than said group A are detected, the location information of pixels in the group A or B into a form of an n × m-bit bit map are stored into a form of an n × m-bit bit map, average luminance values in the group A and B (AYav and BYav) are calculated to construct a block code with the average luminance values in the group A and B, and the location information stored in the bit map; and entropy cording process is performed based on said block code thereby reducing redundant information in block, in frame and between frames.

In the second aspect of the present invention, it is preferred that in the entropy coding process in block, if an absolute value of the average luminance in the group, |AYav-BYav| is not greater than a given threshold, AYav is regarded to be equal BYav (no deviation from the predicted value) to process (delete) redundant information in block; or entropy cording is performed.

It is preferred that in the entropy coding process in frame or between frames, if differential information output from the comparison of an average luminance (AYav1) in group A consisting of pixels having luminance higher than the average luminance in the block, with an average luminance (AYav2) in group A in a spatially or temporally adjacent block, is not greater than a given threshold, AYav2 is regarded to be equal AYav1 (no deviation from the predicted value) to process (delete) redundant information in frame or between frames; or entropy cording is performed.

The entropy cording process is preferably performed by adaptive Huffman coding process which has as many Huffman tables as the amount of predicted information and which performs coding with one Huffman table selected from the plurality of Huffman tables in accordance with the predicted information, or adaptive arithmetic coding process which has as many arithmetic tables as the amount of predicted information and which performs coding with one arithmetic table selected from the plurality of arithmetic tables in accordance with the predicted information.

Further, intraframe compression is preferably carried out prior to interframe compression.

The system for compressing motion image information of the second aspect of the present invention is characterized in that bit map information storage means divides luminance of an input image into a plurality of blocks of n × m pixels (where n and m are integers of 2 or more), calculates an average luminance in each block (Yav) and detects group A where the pixels in the block has luminance higher than the average luminance in the block and group B other than said group A to store the location information of pixels in the group A and B into a form of an n × m-bit bit map;
block coding means calculates average luminance in the group A and B (AYav and BYav) to construct a block code with the average luminance values in the group A and B, and the location information stored in the bit map; and
entropy coding means performs entropy cording process based on said block code thereby reducing redundant information in block, in frame and between frames.

Preferred embodiments in the method of the second aspect of the present invention are equally preferred to the system of the same.

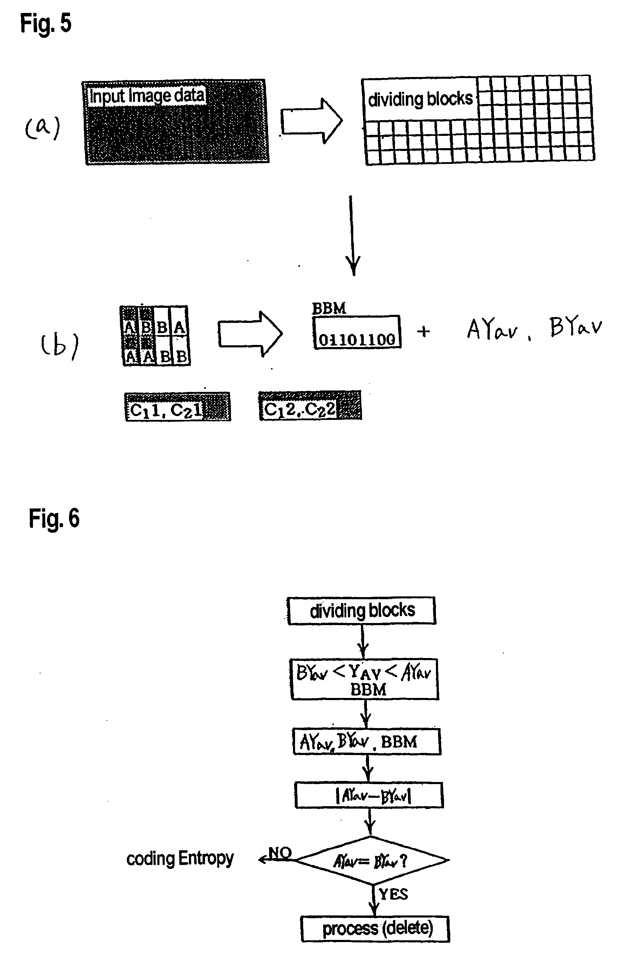

As the block cord used in the second aspect of the present invention, a block coding method of the simplest type as shown in Fig. 5(a), is employed.

The basic structure of the method and system for compressing motion image information of the second aspect of the present invention is described in line with one embodiment of the same. Luminance Y of an input image having N × M pixels is divided into a plurality of blocks having a size of n × m pixels sufficiently smaller than the N × M pixels. In order to simplify the description, n × m is fixed as 2 × 4. The average luminance in a block, Yav is calculated and the pixels in the block are divided into two groups of group A where the pixels have luminance higher than the Yav and group B where the pixels do not belong to group A. The respective pixel location of the group A and B is stored as a form of an n × m-bit bit map information (BBM). Both of the average luminance in the group A and B, AYav and BYav, are calculated. Then, the block code is constructed with these AYav, BYav and BBM (see Fig. 5(b)).

In the entropy coding process, small deviation from predicted code is output as the differential information thereby reducing redundant information in block, in frame and between frames.

Namely, the intrablock entropy cording is firstly performed. If an absolute value of differential information, |AYav - BYav| is not greater than a given threshold, AYav is regarded to be equal BYav (no deviation from the predicted value) to process (delete) redundant information between frames, thereby reducing intrablock redundant information. The other information are compressed by means of adaptive Huffman coding method or adaptive arithmetic coding method (hereinafter, both of the methods are referred to as adaptive cording methods) using one table selected from the plurality of tables in accordance with the predicted information.

Subsequently, the intraframe or interframe entropy coding process is performed. An average luminance of group A (AYav1) in a block is compared with an average luminance of group A (AYav2) in a spatially or temporally adjacent block to output a differential information. If the differential information is not greater than a given threshold, AYav2 is regarded to be equal AYav1 (no deviation from the predicted value) so that the information are processed (deleted), thereby reducing intraframe or interframe redundant information in frame or between frames. At that time, the adaptive coding is performed for BYav based on AYav > BYav.

Next, the method and system for compressing motion image information of the third aspect of the present invention is described in detail. The basic structure of the method and system for compressing motion image information of the third aspect of the present invention is principled by intraframe compression without varying block size.

The method of compressing motion image information of the third aspect of the present invention is characterized in that spatially or temporally adjacent pixels are compared to each other to output differential information of pixel value, a first area where the differential information is greater than a given parameter or a second area other than said first area are detected to store the first and second areas into a form of a 1-bit/pixel bit map; and information of the first area stored in said bit map is compressed, thereby reducing redundant information between frames, wherein prior to interframe compression process, an image in a frame is divided into blocks, each block is approximated by (replaced with) a single plane defined by three pixel values of pixels in the block, and said plane is used as the parameter.

In the third aspect of the present invention, the information of the second area stored in the bit map is preferably processed (deleted) as an area where there is no change in pixel value between frames.

It is preferred that as an approximation method to construct the single plane defined by the three pixel values, mean or the least square method is employed.

The single plane used as the parameter in intraframe compression process, is preferably defined by three pixel values representing the magnitude of a pixel value in the block, the block-to-block gradient of the pixel value in an x direction, and the block-to-block gradient of the pixel value in a y direction.

The information stored in the bit map is preferably compressed by means of a binary image coding method at least one selected from a group consisting of run length, modified READ (MR, MMR), modified Huffman (MH), and JBIG coding method.

The information in the first area stored in the bit map is preferably compressed by means of an adaptive Huffman coding process having as many Huffman tables as the amount of predicted information.

Redundant information between frames are preferably further reduced by means of an entropy cording process; and it is preferred that the entropy cording process is performed by adaptive Huffman coding process which has as many Huffman tables as the amount of predicted information and which performs coding with one Huffman table selected from the plurality of Huffman tables in accordance with the predicted information or adaptive arithmetic coding process which has as many arithmetic tables as the amount of predicted information and which performs coding with one arithmetic table selected from the plurality of arithmetic tables in accordance with the predicted information.

As the differential information used in the third aspect of the invention, an absolute value of pixel difference, an absolute value of pixel difference output from the comparison of pixel t with the corresponding pixel t-1 of another frame, an absolute value of pixel difference output from the comparison of pixels treated on a block-by-block basis between frames, each block including n × m pixels (where n and m are integers of 2 or more), with corresponding pixels of another frame, or an absolute value of pixel difference output from the comparison of pixels treated on a block-by-block basis in a frame, each block including n × m pixels (where n and m are integers of 2 or more), with corresponding pixels t-1 of another frame is preferred.

The n × m pixels are either 2 × 2 pixels, 2 × 4 pixels or 4 × 4 pixels.

Further, it is preferred that when 2 × 2 pixel values between frames are represented by A, B, C, and D, the differential information a, b, c, and d are determined and a 2 × 2-bit bit map is produced such as a = A + B + C + D, b = A - B + C - D, c = A + B - C - D, and d = a - 4D, and wherein decoded output data is produced such as 3A ≈ a + b + c = 3A + B + C - D, 3B ≈ a - b + c = A + 3B - C + D, 3C ≈ a + b - c = A - B + 3C + D, and 3D ≈ a - b - c = -A + B + C + 3D.

Furthermore, it is preferred that intraframe difference presence/absence information is given in the form of bitmap information corresponding to respective 2 × 2 blocks in a frame, and wherein it is determined whether there is a difference between frames by comparing the root-mean-square error of (three) data input to an encoder, that is ((A-A')² + (B-B')² + (C-C')²)^{1/2}, with a parameter, and, if it is determined that there is a difference between frames, a corresponding bit of said intraframe difference presence/absence information is set.

The system for compressing motion image information of the third aspect of the present invention is characterized in that spatially or temporally adjacent pixels are compared to each other to output differential information of pixel value thereby reducing redundant information between frames, said system comprising:
bit map information storage means that detects a first area where the differential information is greater than a given parameter or a second area other than said first area to store the first and second areas into a form of a 1-bit/pixel bit map; and
information compression means that compresses the information in the first area stored in said bit map, wherein said system includes block approximation means that divides a frame into a plurality of blocks, each of which is approximated by (replaced with) a single plane defined by three pixel values of a pixel in the block, prior to interframe compression process, and said plane is used as the parameter.

Preferred embodiments in the method of the third aspect of the present invention are equally preferred to the system of the same.

In one embodiment of the third aspect of the present invention, prior to interframe compression, an image in a frame is divided into blocks, each block is approximated by (replaced with) a single plane defined by three pixel values of a pixel in the block, and said plane is used as the parameter to perform intraframe compression process.

Furthermore, corresponding pixels are compared with each other in each block consisting of n × m pixels (n and m are integers equal to or greater than 2) between frames, and differential information is generated according to the comparison result so as to reduce redundant information between frames. That is, pixels t in a frame are compared with corresponding pixels t-1 in a previous frame, pixel by pixel, and 1-bit bit map is generated which indicates whether the absolute value of the difference is greater or not greater than a given parameter.

In the entropy coding process, codes which will appear in successive frames are predicted, and small deviations from predicted codes are output thereby reducing the redundancy of information. The other information is compressed by means of adaptive Huffman coding or adaptive arithmetic coding in which coding is performed on the basis of a table selected from a plurality of tables in accordance with predicted information.

The third aspect of the present invention is described in further detail below with reference to an embodiment in conjunction with the accompanying drawings.

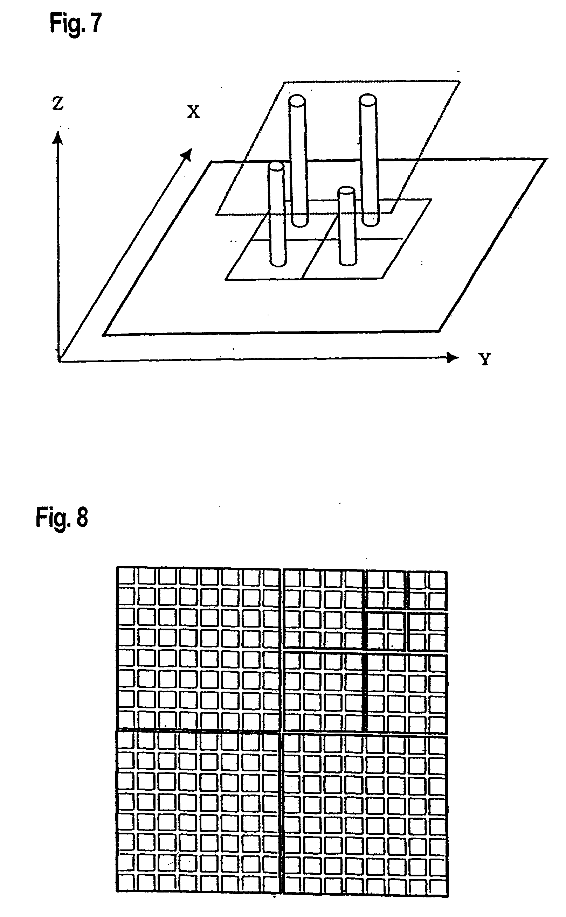

The present embodiment is based on the intraframe compression in which the block size is fixed. That is, as shown in Fig. 7, an image in a frame is divided into blocks in advance, and each of all blocks is approximated (replaced) by a single plane which is defined by three data representing the magnitude of pixel value of the block, the block-to-block gradient of pixel value in the x direction, and the block-to-block gradient of pixel value in the y direction. That is, in the intraframe compression, an image is first divided into blocks, and then the divided blocks are replaced with a single plane for approximation. The plane is defined by three parameters z, x, and y associated with the pixel value in each block, wherein z is the intensity, x is the gradient in the x direction, and y is the gradient in the y direction. The approximation may be performed, for example, using mean or the least squares method. The reduced (compressed) data obtained in the above-described manner defines a plane which indicates gradation when being decompressed. Herein, if the number of pixels included in each block is equal to s, the intraframe compression ratio is given by 3/s. The intraframe compression ratio increases with s but the image quality becomes worse. The size and the shape of each block are selected arbitrarily, as long as each block consists of n × m pixels where n and m are integers equal to or greater than 2.

The basic principles of the interframe compression used in the present embodiment are described below. A first method of interframe compression is as follows. In a frame (t+1) following a current frame t, a block at the same location as that in the current frame is first subjected to the intraframe compression described above so as to obtain three parameters z(t+1), x(t+1), and y(t+1), where z is the intensity, x is the gradient in the x direction, and y is the gradient in the y direction. The root mean square error of z(t+1), x(t+1), and y(t+1) with respect to z(t+1), x(t+1), and y(t+1) is then calculated and compared with a threshold k. If the root means square error is greater than k, it is determined that there is a difference. Alternatively, when the respective differences between z(t+1) and z(t), x(t+1) and x(t), and y(t+1) and y(t) are compared with thresholds kz, kx, and ky, if any difference is greater than the threshold, it is determined that there is a difference. In the case where it is determined that there is a difference, the intraframe location of the block which has been detected to be different is descried in the form of a bit map. One bit map is generated in the former case and three bit maps are generated in the latter case. The bit map is a series of "0"s and "1"s (binary data) and compressed by means of run length compression or the like. The difference data Äz(t) = z(t + 1) -z(t), Äx(t) = x(t + 1) - x(t), and Äy(t) = y(t + 1) - y(t) are entropy-compressed. In this first method, decompression is not required, and thus the calculation can be performed in a short time. However, there is a possibility that calculation errors are accumulated.

In a second interframe compression method, the data obtained by the above-described intraframe compression is first decompressed thereby reproducing the data of pixels in each block. After that, the root mean square error of the reproduced pixel data in each block of a frame (t+1) relative to the pixel data in the corresponding block of a previous frame t is calculated and compared with a threshold k. If a block having a root mean square error greater than the threshold k is found, the block is determined to be different. In the case where it is determined that there is a difference, the intraframe location of the block which has been detected to be different is descried in the form of a bit map. The bit map is a series of "0"s and "1"s (binary data) and compressed by means of run length compression or the like. The difference data Äz(t) = z(t + 1) -z(t), Äx(t) = x(t + 1) - x(t), and Äy(t) = y(t + 1) - y(t) are entropy-compressed. In this first method, decompression is performed, and thus a rather long calculation time is required. However, there is no possibility that calculation errors are accumulated.

A third interframe compression method is described below. The root mean square error of the reproduced pixel data in each block of a next frame (t+1) relative to the pixel data in the corresponding block of a current frame (t) is calculated and compared with a threshold k. If the root mean square error is greater than k, it is determined that there is a difference. In the case where a difference is detected, the difference ÄP between the pixel data in the block of the next frame (t+1) and the pixel data in the corresponding block of the current frame is determined. After that, the above-described intraframe compression is performed. The intraframe location of the block which has been detected to be different is descried in the form of a bit map. The bit map is a series of "0"s and "1"s (binary data) and compressed by means of run length compression or the like. The difference data ÄP is entropy-compressed. In this third method, the compression is performed after determining whether there is a difference. Therefore, this method needs the least amount of calculation and calculation errors are not accumulated.

The 1-bit bit map information stored in the bit map information storage circuit 4 is compressed by a binary image coding technique such as a run length, modified READ (MR, MMR), modified Huffman (MH), or JBIG method. In the case of a binary document image treated by a facsimile machine or the like, there is a high probability that white or black pixels successively appear in one or more continuous areas. Thus, in the run length coding method, one-dimensional segments called runs which include only white or black pixels are employed as units of coding, and the number of pixels included in each run, that is, the length of each run, is employed as a code. For example, in digital facsimiles using a public telephone network, a modified Huffman code is generally used in which the run length model is established separately for black and white pixels.

The modified Huffman coding (MH) is employed as a one-dimensional coding method in facsimile transmission in which an original image is scanned at a pixel density of, for example, 8 pixels/mm thereby obtaining black-and-white pixel information including 1728 pixels per scanning line. The MH code represents the run length, that is, the length of each segment including only white pixels (white run) or only black pixels (black run). Variable length codes are assigned to the respective runs using the statistical tendency that white or black runs having particular lengths occur more frequently than the other lengths, thereby reducing the amount of data.

The modified READ (MR, MMR) method is widely used as a technique for performing two-dimensional coding in addition to the one-dimensional coding. In the NR method, up to one successive scanning line with the normal resolution or up to three successive scanning lines with the high resolution are two-dimensionally coded after being one-dimensionally coded. In the NMR method, the MR method is expanded for the infinite number of scanning lines for both the normal and high resolutions.

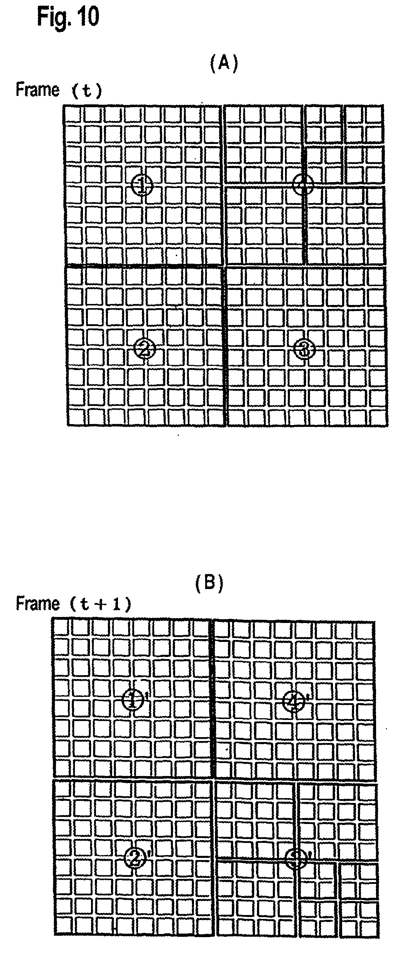

Now, a variable block size compression method is described below with reference to Figs. 8, 9A and 9B. As described above, if the block size is increased, a greater compression ratio is obtained although the details of the original image are lost and the image quality becomes worse. In particular, when an original image consists of a background having a particular uniform color and a line having a small width and having an intensity which is very different from that of the background, there is a possibility that the line with the small width is completely lost. The above problem can be solved by the technique described below. In the following description, it is assumed for simplicity that an image is of monochrome and consists of 16 × 16 pixels.

First, as shown in Fig. 8, the block size is set to 16 × 16, and the whole image is intraframe-compressed (decompressed) according to the above-described method. Each pixel of the decompressed image is compared with the corresponding pixel of the original image, and the difference thereof is compared with a threshold d1. If there is a pixel whose difference is greater than d1, compression (decompression) is performed for a block with a size of 8 × 8 containing that pixel. In this compression (decompression) process, each of the remaining 8 × 8 blocks in the same 16 × 16 block is also compressed. Each pixel of the decompressed image is compared with the corresponding pixel of the original image, and the difference thereof is compared with a threshold d2. If there is a pixel whose difference is greater than d2, compression (decompression) is performed for a block with a size of 4 × 4 containing that pixel. Also in this compression (decompression) process, each of the remaining 4 × 4 blocks in the same 8 × 8 block is also compressed. Each pixel of the decompressed image is compared with the corresponding pixel of the original image, and the difference thereof is compared with a threshold d3. If there is a pixel whose difference is greater than d3, compression (decompression) is performed for a block with a size of 2 × 2 containing that pixel. In this compression (decompression) process, each of the remaining 2 × 2 blocks in the same 4 × 4 block is also compressed. This compression method makes it possible to achieve a high compression ratio without losing the details of the original image.

Interframe compression is further performed after the completion of the above-described intraframe compression. Herein, let us assume that compressed images shown in Figs. 9A and 9B are obtained for the frame (t) and the frame (t+1), respectively, as a result of the intraframe compression described above. For areas 1 → 1' and 2 → 2' having no change in block size, differences are calculated according to one of the methods described above and interframe compression is performed. For the area 4 → 4' in which an increase in block size occurs, the block in the area 4' is treated as a key block (key frame) which is not dependent upon the previous frame and which can be decompressed without needing the previous frame. In this case, the difference calculation is not performed. For the area 3 → 3' in which a reduction in block size occurs, the difference between the data of the frame (t+1) and the decompressed data of the frame (t) is calculated for each reduced block and compression is performed for each reduced block.

According to the first aspect of the present invention, by removing the block conversion, it becomes possible to compress information by means of predictive coding with a high compression ratio and at a high speed while maintaining high image and sound quality. In the conventional technique, if there is a large difference between frames, significant degradation in image quality occurs. In contrast, in the present invention, degradation in image quality is suppressed by groping pixels into blocks each including 2 × 2 pixels and treating pixels on a block-by-block basis. This technique according to the present invention prevents the image quality from having abrupt degradation even when the difference exceeds the intrablock threshold value. That is, the technique according to the present invention allows the image quality to vary in a linear fashion. Thus, it becomes possible to control the communication bit rate without resulting in significant degradation in image quality. Furthermore, it is possible to increase the compression ratio by -20% to 50% while maintaining the apparent image quality at substantially the same level. Furthermore, the adaptive Huffman compression process or the adaptive arithmetic compression process may be performed in such a manner that the generation of differential information and the Huffman coding process, or the generation of differential information and the arithmetic coding process are performed in one step thereby achieving highly efficient use of code words and thus achieving highly efficient coding by means of predictive coding.

Further, according to the first aspect of the present invention, by limiting the information to be compressed, it becomes possible to achieving highly efficient coding and at the same time to obtain high-quality image or sound.

The bit map information stored in the bit map information storage circuit can be compressed by means of a binary image coding method such as, but not limited to, a run length, modified READ (MR, MMR), modified Huffman (MH), or JBIG coding method, thereby making it possible to compress image information in a highly efficient manner by means of predictive coding. This allows an improvement in image quality in digital facsimile transmission or the like using a public telephone network.

When 2 × 2 pixel data input to an encoder between frames are represented by A, B, C, and D, output data a, b, c, and d are determined and a 2 × 2 bitmap is produced such as a = A + B + C + D, b = A - B + C - D, c = A + B - C - D, and d = a - 4D, and wherein decoded output data is produced such as 3A ≈ a + b + c = 3A + B + C - D, 3B ≈ a - b + c = A + 3B - C + D, 3C ≈ a + b - c = A - B + 3C + D, 3D ≈ a - b - c = -A + B + C + 3D. Thus, reproduced data has an intermediate property between that obtained by passing original data through a smoothing filter and that obtained through an edge extraction filter (more similar to that obtained via the and edge extraction filter), and a 1/4 error is diffused over the entire data. This makes it possible to reproduce an image using as small as 3/4 of data so that the resultant reproduced image becomes similar to that obtained by passing its original data through filters.

The intraframe difference presence/absence information is given in the form of bitmap information corresponding to respective 2 × 2 blocks in a frame, wherein it is determined whether there is a difference between frames by comparing the root-mean-square error of (three) data input to an encoder, that is ((A-A')² + (B-B')² + (C-C')²)^{1/2}, with the parameter, and, if it is determined that there is a difference between frames, a corresponding bit of the intraframe difference presence/absence information is set. This technique prevents the image quality from having abrupt degradation even when the difference exceeds the intrablock threshold value. That is, the technique according to the present invention allows the image quality to vary in a linear fashion. Thus, it becomes possible to control the communication bit rate without resulting in significant degradation in image quality. Furthermore, it is possible to increase the compression ratio by -20% to 50% while maintaining the apparent image quality at substantially the same level.

According to the second aspect of the present invention, by removing the block conversion, it becomes possible to compress information by means of predictive coding with a high compression ratio and at a high speed while maintaining high image and sound quality.

According to the third aspect of the present invention, by removing the block conversion, it becomes possible to compress information by means of predictive coding with a high compression ratio and at a high speed while maintaining high image and sound quality. In the conventional technique, if there is a large difference between frames, significant degradation in image quality occurs. In contrast, in the third aspect of the present invention, degradation in image quality is suppressed by groping pixels into blocks each including 2 × 2 pixels and treating pixels on a block-by-block basis. This technique.according to the present invention prevents the image quality from having abrupt degradation even when the difference exceeds the intrablock threshold value. That is, the technique according to the present invention allows the image quality to vary in a linear fashion. Thus, it becomes possible to control the communication bit rate without resulting in significant degradation in image quality. Furthermore, it is possible to increase the compression ratio by -20% to 50% while maintaining the apparent image quality at substantially the same level. Furthermore, the adaptive Huffman compression process or the adaptive arithmetic compression process may be performed in such a manner that the generation of differential information and the Huffman coding process, or the generation of differential information and the arithmetic coding process are performed in one step thereby achieving highly efficient use of code words and thus achieving highly efficient coding by means of predictive coding.

Further, according to the third aspect of the present invention, by limiting the information to be compressed, it becomes possible to achieving highly efficient coding and at the same time to obtain high-quality image or sound.

The present invention provides a method and system for compressing motion image information which is capable of compressing information such as image information or sound information by means of predictive coding, with a high compression ratio and at a high speed while maintaining high image and sound quality.

In the method and system of the present invention, spatially or temporally adjacent pixels are compared to each other to output differential information of pixel values; a first area where the differential information is greater than a given parameter or a second area other than said first area are detected and stored into a form of a 1-bit/pixel bit map; and the information of the first area stored in said bit map is compressed, thereby reducing redundant information between frames.

## Claims

1. A method of compressing motion image information which comprises the steps of comparing spatially or temporally adjacent pixels to each other to output differential information of pixel values; detecting a first area where the differential information is greater than a given parameter or a second area other than said first area to store the first and second areas into a form of a 1-bit/pixel bit map; and compressing information of the first area stored in said bit map, thereby reducing redundant information between frames.

2. The method of compressing motion image information according to claim 1, wherein the information of the second area stored in the bit map is processed (deleted) as an area where there is no change in pixel value between frames.

3. The method of compressing motion image information according to claim 1 or 2, wherein the information stored in the bit map is compressed by means of a binary image coding method at least one selected from a group consisting of run length, modified READ (MR, MMR), modified Huffman (MH), and JBIG coding method.

4. The method of compressing motion image information according to any one of claims 1 to 3, wherein the information of the first area stored in the bit map is compressed by means of an adaptive Huffman coding process having as many Huffman tables as the amount of predicted information.

5. The method of compressing motion image information according to any one of claims 1 to 4, wherein redundant information between frames are further reduced by means of an entropy cording process.

6. The method of compressing motion image information according to claim 5, wherein the entropy cording process is performed by means of adaptive Huffman coding process which has as many Huffman tables as the amount of predicted information and which performs coding with one Huffman table selected from the plurality of Huffman tables in accordance with the predicted information or adaptive arithmetic coding process which has as many arithmetic tables as the amount of predicted information and which performs coding with one arithmetic table selected from the plurality of arithmetic tables in accordance with the predicted information.

7. The method of compressing motion image information according to any one of claims 1 to 6, wherein an absolute value of pixel value are used as the differential information.

8. The method of compressing motion image information according to any one of claims 1 to 6, wherein an absolute value of pixel difference output from the comparison of pixel t with the corresponding pixel t-1 of another frame is used as the differential information.

9. The method of compressing motion image information according to any one of claims 1 to 6, wherein an absolute value of pixel difference output from the comparison of pixels treated on a block-by-block basis between frames, each block including n × m pixels (where n and m are integers of 2 or more), with corresponding pixels of another frame, is used as the differential information.

10. The method of compressing motion image information according to any one of claims 1 to 6, wherein an absolute value of pixel difference output from the comparison of pixels treated on a block-by-block basis in a frame, each block including n × m pixels (where n and m are integers of 2 or more), with corresponding pixels t-1 of another frame, is used as the differential information.

11. The method of compressing motion image information according to claim 9 or 10, wherein the n × m pixels are either 2 × 2 pixels, 2 × 4 pixels or 4 × 4 pixels.

12. The method of compressing motion image information according to Claim 11, wherein when 2 × 2 pixel values between frames are represented by A, B, C, and D, the differential information a, b, c, and d are determined and a 2 × 2-bit bit map is produced such as a = A + B + C + D, b = A - B + C - D, c = A + B - C - D, and d = a - 4D, and wherein decoded output data is produced such as 3A ≈ a + b + c = 3A + B + C - D, 3B ≈ a - b + c = A + 3B - C + D, 3C ≈ a + b - c = A - B + 3C + D, and 3D ≈ a - b - c = -A + B + C + 3D.

13. The A method of compressing motion image information, according to claim 12, wherein intraframe difference presence/absence information is given in the form of bitmap information corresponding to respective 2 × 2 blocks in a frame, and wherein it is determined whether there is a difference between frames by comparing the root-mean-square error of (three) data input to an encoder, that is ((A-A')² + (B-B')² + (C-C')²)^{1/2}, with a parameter, and, if it is determined that there is a difference between frames, a corresponding bit of said intraframe difference presence/absence information is set.

14. The A method of compressing motion image information, according to any one of claims 1 to 13, wherein intraframe compression is carried out prior to interframe compression.

15. A system for compressing motion image information by means of comparing spatially or temporally adjacent pixels to each other to output differential information of pixel value thereby reducing redundant information between frames, said system comprising:
bit map information storage means that detects a first area where the differential information is greater than a given parameter or a second area other than said first area to store the first and second areas into a form of a 1-bit/pixel bit map; and
information compression means that compresses the information in the first area stored in said bit map.

16. The system for compressing motion image information according to claim 15, wherein the information compression means processes (deletes) the information of the second area stored in the bit map as an area where there is no change in pixel value between frames.

17. The system for system for compressing motion image information according to claim 15 or 16, wherein entropy cording means that further reduces redundant information between frames is added.

18. The system for compressing motion image information according to any one of claims 15 to 17, wherein intraframe compression is carried out prior to interframe compression.

19. A method of compressing motion image information which comprises the steps of dividing luminance of input image into a plurality of blocks of n × m pixels (where n and m are integers of 2 or more), calculating average luminance in each block (Yav), detecting group A where the pixels in the block has luminance higher than the average luminance in the block and group B other than said group A to store the location information of pixels in the group A or B into a form of an n × m-bit bit map; calculating average luminance in the group A and B (AYav and BYav) to construct a block code with the average luminance values in the group A and B, and the location information stored in the bit map; and performing entropy cording process based on said block code thereby reducing redundant information in block, in frame and between frames.

20. The method of compressing motion image information according to claim 19, wherein in the entropy coding process in block, if an absolute value of the average luminance in the group, |AYav - BYav| is not greater than a given threshold, AYav is regarded to be equal BYav (no deviation from the predicted value) to process (delete) redundant information in block; or entropy cording is performed.

21. The method of compressing motion image information according to claim 19 or 20, wherein in the entropy coding process in frame or between frames, if differential information output from the comparison of an average luminance (AYav1) in group A consisting of pixels having luminance higher than the average luminance in the block, with an average luminance (AYav2) in group A in a spatially or temporally adjacent block, is not greater than a given threshold, AYav2 is regarded to be equal AYav1 (no deviation from the predicted value) to process (delete) redundant information in frame or between frames; or entropy cording is performed.

22. The method of compressing motion image information according to any one of claims 19 to 21, wherein the entropy cording process is performed by adaptive Huffman coding process which has as many Huffman tables as the amount of predicted information and which performs coding with one Huffman table selected from the plurality of Huffman tables in accordance with the predicted information, or adaptive arithmetic coding process which has as many arithmetic tables as the amount of predicted information and which performs coding with one arithmetic table selected from the plurality of arithmetic tables in accordance with the predicted information.

23. The method of compressing motion image information according to any one of claims 19 to 22, wherein intraframe compression is carried out prior to interframe compression.

24. A system for compressing motion image information which comprises:
bit map information storage means that divides luminance of an input image into a plurality of blocks of n × m pixels (where n and m are integers of 2 or more), calculates an average luminance in each block (Yav) and detects group A where the pixels in the block has luminance higher than the average luminance in the block and group B other than said group A to store the location information of pixels in the group A and B into a form of an n × m-bit bit map;
block coding means that calculates average luminance in the group A and B (AYav and BYav) to construct a block code with the average luminance values in the group A and B, and the location information stored in the bit map; and
entropy coding means that performs entropy cording process based on said block code thereby reducing redundant information in block, in frame and between frames.

25. The system for compressing motion image information according to claim 24, wherein intraframe compression is carried out prior to interframe compression.

26. A method of compressing motion image information which comprises the steps of comparing spatially or temporally adjacent pixels to each other to output differential information of pixel value; detecting a first area where the differential information is greater than a given parameter or a second area other than said first area to store the first and second areas into a form of a 1-bit/pixel bit map; and compressing information of the first area stored in said bit map, thereby reducing redundant information between frames, wherein prior to interframe compression process, an image in a frame is divided into blocks, each block is approximated by (replaced with) a single plane defined by three pixel values of pixels in the block, and said plane is used as the parameter.

27. The method of compressing motion image information according to claim 26, wherein the information of the second area stored in the bit map is processed (deleted) as an area where there is no change in pixel value between frames.

28. The method of compressing motion image information according to claim 26 or 27, wherein as an approximation method to construct the single plane defined by the three pixel values, mean or the least square method is employed.

29. The method of compressing motion image information according to any one of claims 26 to 28, wherein the single plane used as the parameter in intraframe compression process, is defined by three pixel values representing the magnitude of a pixel value in the block, the block-to-block gradient of the pixel value in an x direction, and the block-to-block gradient of the pixel value in a y direction.

30. The method of compressing motion image information according to any one of claims 26 to 29, wherein the information stored in the bit map is compressed by means of a binary image coding method at least one selected from a group consisting of run length, modified READ (MR, MMR), modified Huffman (MH), and JBIG coding method.

31. The method of compressing motion image information according to any one of claims 26 to 30, wherein the information in the first area stored in the bit map is compressed by means of an adaptive Huffman coding process having as many Huffman tables as the amount of predicted information.

32. The method of compressing motion image information according to any one of claims 26 to 31, wherein redundant information between frames are further reduced by means of an entropy cording process.

33. The method of compressing motion image information according to claim 32, wherein the entropy cording process is performed by adaptive Huffman coding process which has as many Huffman tables as the amount of predicted information and which performs coding with one Huffman table selected from the plurality of Huffman tables in accordance with the predicted information or adaptive arithmetic coding process which has as many arithmetic tables as the amount of predicted information and which performs coding with one arithmetic table selected from the plurality of arithmetic tables in accordance with the predicted information.

34. The method of compressing motion image information according to any one of claims 26 to 33, wherein an absolute value of pixel difference is used as the differential information.

35. The method of compressing motion image information according to any one of claims 26 to 33, wherein an absolute value of pixel difference output from the comparison of pixel t with the corresponding pixel t-1 of another frame is used as the differential information.

36. The method of compressing motion image information according to any one of claims 26 to 33, wherein an absolute value of pixel difference output from the comparison of pixels treated on a block-by-block basis between frames, each block including n × m pixels (where n and m are integers of 2 or more), with corresponding pixels of another frame, is used as the differential information.

37. The method of compressing motion image information according to any one of claims 26 to 33, wherein an absolute value of pixel difference output from the comparison of pixels treated on a block-by-block basis in a frame, each block including n × m pixels (where n and m are integers of 2 or more) , with corresponding pixels t-1 of another frame, is used as the differential information.

38. The method of compressing motion image information according to claim 36 or 37, wherein the n × m pixels are either 2 × 2 pixels, 2 × 4 pixels or 4 × 4 pixels.

39. The method of compressing motion image information according to Claim 38, wherein when 2 × 2 pixel values between frames are represented by A, B, C, and D, the differential information a, b, c, and d are determined and a 2 × 2-bit bit map is produced such as a = A + B + C + D, b = A - B + C - D, c = A + B - C - D, and d = a - 4D, and wherein decoded output data is produced such as 3A ≈ a + b + c = 3A + B + C - D, 3B ≈ a - b + c = A + 3B - C + D, 3C ≈ a + b - c = A - B + 3C + D, and 3D ≈ a - b - c = -A + B + C + 3D.

40. The A method of compressing motion image information, according to claim 39, wherein intraframe difference presence/absence information is given in the form of bitmap information corresponding to respective 2 × 2 blocks in a frame, and wherein it is determined whether there is a difference between frames by comparing the root-mean-square error of (three) data input to an encoder, that is ((A-A')² + (B-B')² + (C-C')²)^{1/2}, with a parameter, and, if it is determined that there is a difference between frames, a corresponding bit of said intraframe difference presence/absence information is set.

41. A system for compressing motion image information by means of comparing spatially or temporally adjacent pixels to each other and outputting differential information of pixel value thereby reducing redundant information between frames, said system comprising:
bit map information storage means that detects a first area where the differential information is greater than a given parameter or a second area other than said first area to store the first and second areas into a form of a 1-bit/pixel bit map; and
information compression means that compresses the information in the first area stored in said bit map, wherein said system includes block approximation means that divides a frame into a plurality of blocks, each of which is approximated by (replaced with) a single plane defined by three pixel values of a pixel in the block, prior to interframe compression process , and said plane is used as the parameter.

42. The system for compressing motion image information according to claim 41, wherein the information in the second area stored by the bit map information storage means is processed (deleted) as an area where there is no change in pixel value between frames.

43. The system for compressing motion image information according to claim 41 or 42, wherein as an approximation method to construct the single plane defined by the three pixel values, mean or the least square method is employed.

44. The system for compressing motion image information according to any one of claims 41 to 43, wherein the single plane used as the parameter in intraframe compression, is defined by three pixel values representing the magnitude of a pixel value in the block, the block-to-block gradient of the pixel value in an x direction, and the block-to-block gradient of the pixel value in a y direction.
